# EUROPÄISCHE PATENTANMELDUNG

(11) **EP 1 748 532 A2**
(43) Veröffentlichungstag der Anmeldung: **31.01.2007**
(21) Anmeldenummer: 06014907.7
(22) Anmeldetag: 18.07.2006
(51) Int. Cl.: H02K 1/17, H02K 23/04

(54) **Gehäuse für eine elektrische Kleinmaschine**

(30) Priorität: 27.07.2005 DE 102005035146
(71) Anmelder: Scheuermann & Heilig GmbH, 74722 Buchen-Hainstadt (DE)
(72) Erfinder: Bundschuh, Wieland, Dr., 74722 Buchen (DE); Gottberg, Nadine, Dipl.-Ing., 69429 Waldbrunn (DE); Volk, Thomas, 74722 Buchen-Götzingen (DE)
(74) Vertreter: Peterreins, Frank

(57) **Zusammenfassung**

Die vorliegende Erfindung betrifft ein Gehäuse für eine elektrische Kleinmaschine, wie z.B. einen Generator oder einen Elektromagneten und insbesondere für einen permanentmagnetisch erregten Elektromotor. Erfindungsgemäß wird das Gehäuse aus zumindest zwei Gehäuselagen (2, 3) gebildet ist, von denen zumindest eine Gehäuselage (3) in ihrem Umfang nicht geschlossen ist. Insbesondere kann eine Gehäuselage (3) an mindestens zwei Stellen unterbrochen sein, wobei mindestens eine der Gehäuselagen (2, 3) aus zwei konzentrischen Zylinderbögen (3) besteht. Der Erfindung sieht an Stellen, die für den magnetischen Rückfluss wichtig sind, mehr magnetisch leitfähiges Material vor als an anderen Gehäusestellen. Hierdurch ermöglicht es die Erfindung, magnetisch leitfähiges Material, wie kaltgewalztes Spaltband, z.B. galvanisch-verzinktes Stahlblech oder sendzimir-verzinktes Stahlblech, einzusparen. Material wird nur an Stellen eingesetzt, an denen es strukturell oder funktional notwendig ist. Dies erlaubt eine Gewichtsreduktion des Gehäuses und eine Kostenreduktion.

## Beschreibung

Die vorliegende Erfindung betrifft ein Gehäuse für eine elektrische Kleinmaschine, insbesondere für einen permanentmagnetisch erregten Elektromotor, wie z.B. einen Stellmotor oder einen Lüftermotor, sowie eine elektrische Kleinmaschine, die ein solches Gehäuse aufweist, und ein Herstellungsverfahren für ein solches Gehäuse.

Im Stand der Technik sind Gehäuse für Elektromotoren bekannt, die verzinkte Stahlbleche verwenden. Die verzinkten Stahlbleche dienen zur Verbesserung des magnetischen Rückschlusses. Da sie im Stand der Technik zugleich die strukturelle Stabilität und Maßhaltigkeit des Gehäuses gewährleisten, weisen sie Dicken von 2mm und mehr auf.

Aus DE 28 10 215 C3 ist ein Gehäuse für eine elektrische Maschine bekannt, um das ein zusätzliches Rückschlussblech herumgebogen wird. Das zusätzliche Rückschlussblech wird als geschlossener Ring um das Gehäuse gelegt, um so den magnetischen Rückschluss zu verbessern.

DE 197 54 361 A1 offenbart einen Rückschlussring innerhalb eines Motorgehäuses zu platzieren, um so den magnetischen Rückschluss zu verbessern. Der Rückschlussring ist so eingebracht, dass die Innenseite des Motorgehäuses an der Außenseite des Rückschlussrings anliegt. Der Rückschlussring weist die Form eines Zylinders auf.

Die Aufgabe der vorliegenden Erfindung ist es, einen guten magnetischen Rückschluss für eine elektrische Kleinmaschine bei möglichst effizienter Nutzung der verarbeiteten Materialien bereitzustellen. Eine weitere Aufgabe besteht in der Bereitstellung eines gewichtsreduzierten Gehäuses, sowie einer elektrischen Kleinmaschine mit einem erfindungsgemäßen Gehäuse. Zusätzlich ist es Aufgebe der vorliegenden Erfindung, ein Verfahren zur Herstellung eines solchen Gehäuses bereitzustellen.

Die Aufgaben werden durch eine Gehäuse gemäß Anspruch 1, eine elektrische Kleinmaschine gemäß Anspruch 30 bzw. durch ein Verfahren gemäß Anspruch 31 gelöst. Die abhängigen Ansprüche enthalten vorteilhafte Ausgestaltungen der Erfindung.

Der Erfindung sieht an Stellen, die für den magnetischen Rückfluss wichtig sind, mehr magnetisch leitfähiges Material vor als an anderen Gehäusestellen. Es werden nicht ausschließlich geschlossene Gehäuselagen homogener Stärke verwendet. Hierdurch ermöglicht es die Erfindung, magnetisch leitfähiges Material, wie kaltgewalztes Spaltband, z.B. galvanisch-verzinktes Stahlblech oder sendzimirverzinktes Stahlblech, einzusparen. Material wird nur an Stellen eingesetzt, an denen es strukturell oder funktional notwendig ist. Dies erlaubt eine Gewichtsreduktion des Gehäuses und eine Kostenreduktion, wenn man bedenkt, dass ungefähr 70% - 80% der Herstellungskosten eines solchen Gehäuses Materialkosten sind.

Eine elektrische Kleinmaschine, wie ein Motor, ein Generator oder ein Elektromagnet, gemäß der Erfindung weist ein Gehäuse auf, das aus zumindest zwei Lagen gebildet ist, von denen zumindest eine in ihrem Umfang nicht geschlossen ist. Bevorzugt ist eine Gehäuselage an zwei Stellen unterbrochen, so dass diese Gehäuselage aus zwei Teilen besteht, die nicht in direktem Kontakt miteinander stehen. Unterschiedliche Gehäuselagen können aus dem gleichen Material bestehen, sie können jedoch auch aus Materialien mit unterschiedlichen Eigenschaften (z.B. bei magnetischer Leitfähigkeit, mechanischer Festigkeit, usw.) und unterschiedlichen Materialstärken bestehen.

Das Gehäuse kann eine zylindrische Form aufweisen, wie sie in den Zeichnungen dargestellt ist. Das Gehäuse kann allerdings auch in einem Querschnitt, senkrecht zur Längsachse des Gehäuses, eine rechteckartige Form mit bevorzugterweise abgerundeten Ecken aufweisen. Beliebige Zwischenformen zwischen den beiden beschriebenen Formen sind selbstverständlich möglich. Zur Vereinfachung der Beschreibung wird im weitem Verlauf der Beschreibung eine zylindrische Form zur Erläuterung verwendet.

Hier kann eine nicht geschlossene Gehäuselage aus zwei konzentrischen Zylinderbögen bestehen. Vorteilhafterweise sind die beiden Zylinderbögen so angeordnet, dass die beiden Aussparungen zwischen ihnen gleich groß sind. Weiterhin kann die Achse, die ihre Schwerpunkte verbindet, ungefähr senkrecht auf einer Achse stehen, die die Schwerpunkte der Permanentmagneten verbindet, gesehen in einem Querschnitt senkrecht zur Gehäuseachse. Gemäß einer bevorzugten Ausführungsform der Erfindung sind die Gehäuselagen spiegelsymmetrisch zu einer Achse, die die Schwerpunkte der beiden Permanentmagneten verbindet, gesehen in einem Querschnitt senkrecht zur Gehäuselängsachse. Dies ist besonders für eine oder mehrere nicht geschlossne Gehäuselagen von Bedeutung. Jeder der Zylinderbögen einer nicht geschlossenen Lage kann z.B. eine Bogenlänge bezogen auf den Radius der betreffenden Gehäuselage im Bereich von 0.1*Pi bis 0.9*Pi aufweisen.

Gemäß einer weiteren Ausführungsform der vorliegenden Erfindung weist das Gehäuse eine geschlossene Gehäuselage auf, innerhalb derer eine nicht geschlossene Gehäuselage liegt. Die geschlossene Gehäuselage kann über ihren Umfang einen konstanten Radius aufweisen. Alternativ kann in den Bereichen, in denen die nicht geschlossene Lage unterbrochen ist, die geschlossene Lage in ihrem Radius so reduziert sein, dass ihr Innenradius dem Innenradius der Bögen der nicht geschlossenen Lage entspricht. In den Bogenbereichen, in denen die nicht geschlossene Gehäuselage vorhanden ist, ist der Innenradius der geschlossenen Gehäuselage um die Dicke der nicht geschlossenen Gehäuselage vergrößert. Gemäß noch einer weiteren Ausführungsform der vorliegenden Erfindung ist eine zusätzliche dritte Gehäuselage vorgesehen. Wahlweise ist die dritte Gehäuselage geschlossenen und liegt innerhalb der beiden anderen Lagen. Die drei Lagen sind aneinander gefügt und bilden eine Einheit.

Bei einem Gehäuse, das aus drei Gehäuselagen besteht, sind beispielsweise die beiden äußeren Lagen nicht geschlossen, wobei insbesondere die Zylinderbogenlängen der Gehäuselagen mit dem Gehäuselagenradius abnehmen.

Gemäß einer weiteren Ausführungsform der Erfindung weist mindestens eine Gehäuselage eine Dicke auf, die von der Dicke einer anderen Gehäuselage abweicht. Je nach den konstruktiven Gegebenheiten kann z.B. die innerste Gehäuselage dünner sein, als eine weiter außen liegende Gehäuselage oder umgekehrt. Wird für den magnetischen Rückschluss eine große Materialstärke benötigt, für die mechanische Stabilität jedoch nur eine Materialstärke, die weniger als die Hälfte der Materialstärke für den magnetischen Rückschluss ist, so kann eine innere geschlossene Lage dünner gewählt werden als eine weiter außen liegende Lage, die nicht geschlossen ist. Bei einem Gehäuse aus zwei Gehäuselagen, bei dem die innere Gehäuselage nicht geschlossen ist und die äußere Gehäuselage geschlossen ist, wird hingegen eine größere Dicke für die innere Gehäuselage gewählt werden. Bei einem Gehäuse aus drei Gehäuselagen können z.B. Lagen nach außen hin mit steigender Dicke gewählt werden, um einen besseren magnetischen Rückfluss bereitzustellen, insbesondere wenn nur die innerste Lage geschlossen ist. Es ist eine Vielzahl weiterer Kombinationen möglich.

Gemäß wiederum einer weiteren Ausführungsform der vorliegenden Erfindung besteht zumindest eine der Gehäuselagen aus einem kunststoffartigen Material bzw. aus einem Kunststoffinaterial. Dies bietet weites Potential für Gewichtsreduktion. Zudem sind Kunststoffgehäuseteile kostengünstig herstellbar. Eine oder mehrere Kunststoffgehäuselagen sorgen für die mechanische Stabilität und zumindest eine Gehäuselage aus einem magnetisch leitfähigen Material dient dem magnetischen Rückschluss. Auch hier sind verschiedene Gehäuseaufbauten möglich, so kam z.B. eine Kunststoffgehäuselage geschlossen sein. Diese Lage kann entweder eine innere oder eine äußere Lage sein, wobei die jeweils andere Lage aus einem magnetisch leitfähigen Material besteht. Eine Vielzahl weiterer Kombinationen ist möglich, auch mit mehr als zwei Gehäuselagen.

Durch die Aufteilung in mehrere Gehäuselagen kann die Dicke jeder Lage entsprechend den jeweiligen Erfordernissen gewählt werden. Bei herkömmlichen Gehäusen werden Gehäuseblechdicken von 2mm oder mehr verwendet, um für einen ausreichenden magnetischen Rückschluss zu sorgen. Hingegen würde in vielen Fällen eine Wandstärke von ungefähr 1,5mm für die mechanische Stabilität ausreichen. Die vorliegende Erfindung ermöglicht es, diese Diskrepanz vorteilhaft auszunutzen, so kann z.B. eine Gehäuselage, die für die mechanische Stabilität sorgt eine Dicke von weniger als 2mm aufweisen und mit einer weiteren Gehäuselage für den magnetischen Rückschluss kombiniert werden. Dies ermöglicht eine effizientere Materialverwendung und somit Materialkosteneinsparungen.

Vorteilhafterweise werden die Gehäuselagen gefügt durch Form-, Kraft- oder Stoffschluss, z.B. durch Duchsetzfügen oder Schweißen. Insbesondere das Durchsatzfügen bietet ein Verfahren, welches für die Massenproduktion auf Grund seiner geringen Kosten geeignet ist.

Eine geschlossene Gehäuselage ist bevorzugt an ihren Endkanten mit Haltemitteln versehen, die ineinander greifen, so dass eine geschlossene Gehäuselage gebildet wird. Zur Gewährleistung der mechanischen Stabilität und eines guten magnetischen Rückflusses liegen die Gehäuselagen insbesondere ohne Zwischenräume in radialer Richtung übereinander.

Die Erfindung stellte eine elektrische Kleinmaschine, die permanentmagnetisch erregt wird, insbesondere einen Elektromotor, bereit, die ein erfinderisches Gehäuse, wie es oben erläutert wurde, verwendet. Somit profitiert die Kleinmaschine als Ganzes von den dargelegten Vorteilen des Gehäuses.

Ein Gehäuse gemäß der vorliegenden Erfindung kann z.B. wie folgt hergestellt werde. Die Mehrzahl der Gehäuselagen wird gemeinsam gebogen. Dies ermöglicht die Einsparung von Arbeitsschritten und somit eine Steigerung der Produktivität. Bei mehrlagigen Blechen addieren sich die benötigten Biegekräfte der einzelnen Lagen, wird hingegen ein Blech mit erhöhter Dicke verwendet, so steigen die benötigten Biegekräfte mit der dritten Potenz der Materialstärke. Weiterhin lassen sich dünnere Bleche aufgrund der engeren Halbzeugtoleranzen mit höherer Präzision und höherer Prozesssicherheit verarbeiten. Außerdem können durch die Verwendung von dünneren Blechen kostengünstigere, vorveredelte (u.a. verzinkte) Bleche mit Korrosionsschutz an den Schnittkanten durch kathodische Femwirkung verwendet werden. Dies ist bei Materialstärken jenseits von ungefähr 3 mm nicht möglich.

Es besteht die Möglichkeit eine Mehrzahl von Gehäuselagen, die gemäß des erfinderischen Verfahrens gebogen werden, mit einer oder mehreren Gehäuselagen aus einem kunststoffartigen Material zu kombinieren.

Die Gehäuselagen werden bevorzugt um einen Dorn gebogen, wobei sich dieses Biegen aus mehreren z.B. vier Schritten zusammensetzt, die ohne Bewegungsunterbrechung ineinander übergehen und so einen kontinuierlichen Umformprozess bilden. In einem ersten Schritt können die außen liegenden Abschnitte vorgebogen werden.

Eine oder mehrere Gehäuselagen können alternativ durch Tiefziehen oder mit Trägerstreifen in Folgeverbundwerkzeugen oder auf Transferpressen hergestellt werden.

Die vorliegende Erfindung wird nachfolgend anhand bevorzugter Ausführungsformen unter Bezug auf die beigefügten Zeichnungen erläutert.
- Fig. 1: ist ein Querschnitt eines Gehäuses mit eingebauten Permanentmagneten gemäß einer Ausführungsform der vorliegenden Erfindung.
- Fig. 2: ist ein Querschnitt eines Gehäuses mit eingebauten Permanentmagneten gemäß einer anderen Ausführungsform der vorliegenden Erfindung.
- Fig. 3: ist ein Querschnitt eines Gehäuses mit eingebauten Permanentmagneten gemäß einer weiteren Ausführungsform der vorliegenden Erfindung.
- Fig. 4: ist ein Querschnitt eines Gehäuses mit eingebauten Permanentmagneten gemäß noch einer weiteren Ausführungsform der vorliegenden Erfindung.
- Fig. 5: ist ein Seitenansicht und eine Draufsicht eines Gehäuses gemäß der Ausführungsform aus Fig. 1 der vorliegenden Erfindung vor dem Biegen.
- Fig. 6: ist ein Seitenansicht und eine Draufsicht eines Gehäuses gemäß der Ausführungsform aus Fig. 2 der vorliegenden Erfindung vor dem Biegen.
- Fig. 7: ist eine Seitenansicht, die den Biegeprozess gemäß der Erfindung verdeutlicht.

Für gleiche oder vergleichbare Gegenstände werden in der folgenden Beschreibung gleiche Bezugszeichen verwendet.

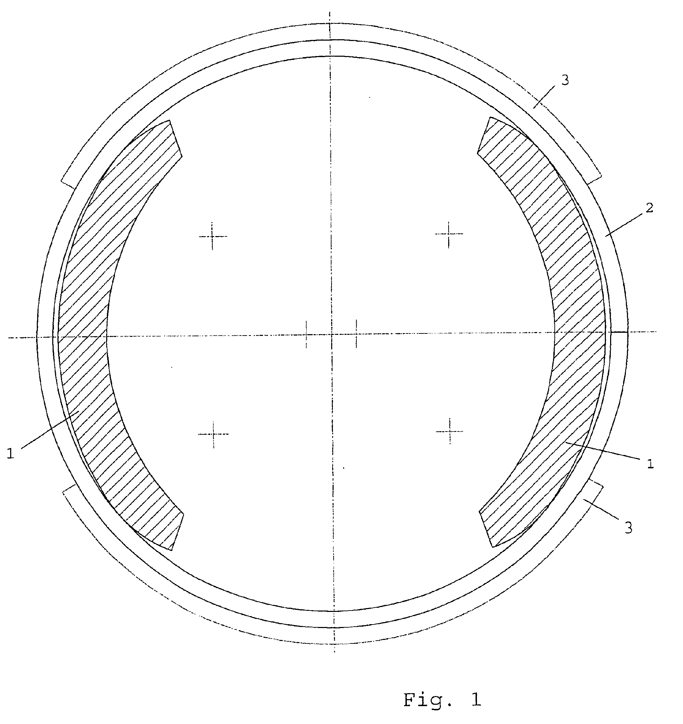

Fig. 1 zeigt einen Querschnitt durch ein Gehäuse gemäß der Erfindung senkrecht zu Längsachse des Gehäuses. In diesem Beispiel ist das Gehäuse zylindrisch. Ein Paar von Permanentmagneten ist mit dem Bezugszeichen 1 versehen. Gemäß dieser Ausführungsform der vorliegenden Erfindung sind sie von einer geschlossenen Gehäuselage 2 umgeben. Eine nicht geschlossene Gehäuselage ist mit 3 bezeichnet. Die Gehäuselage 3 besteht aus zwei gleichen Zylinderbögen, die um 90° gegen die Permanentmagneten 1 verdreht sind. Somit sorgen sie für einen verbesserten magnetischen Rückfluss. Gleichzeitig wird Material eingespart, da die Gehäuselage 3 nicht geschlossen ist. Ein weiterer Vorteil ist, dass sich je nach Bedarf nicht alle Gehäuselagen über die gesamte Länge des Gehäuses erstrecken müssen.

Dadurch kann weiteres Material gespart werden. Zudem müssen nicht bei allen Lagen engen Längen- oder Planlauftoleranzen eingehalten werden. Entsprechend kann gegebenenfalls das seitliche Beschneiden entfallen, was ebenfalls Material einspart und die Werkzeugkosten reduziert. Die Bogenlänge der Zylinderbögen 3 kann nach Bedarf gewählt werden, ebenso kann die Dicke der Gehäuselagen 2, 3 angepasst werden, dies gilt in Analogie ebenfalls für die Gehäuse in den anderen Figuren.

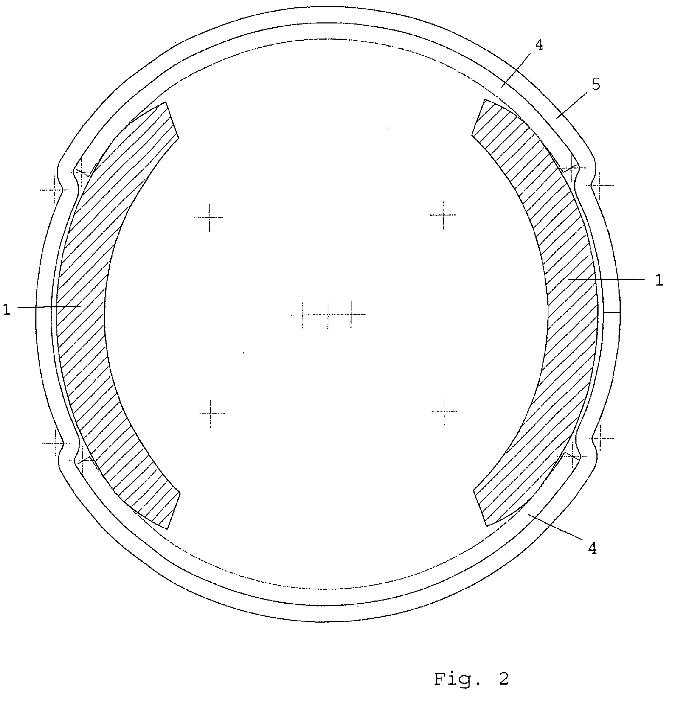

Fig. 2 stellt, in gleicher Art und Weise wie Fig. 1, eine andere Ausführungsform der vorliegenden Erfindung dar. Hier ist die innere Gehäuselage 4 nicht geschlossen und die äußere Gehäuselage 5 ist geschlossen. Die geschlossene Gehäuselage 5 ist in ihrem Durchmesser in den Bereichen reduziert, in denen die nicht geschlossene Gehäuselage 4 Aussparungen aufweist.

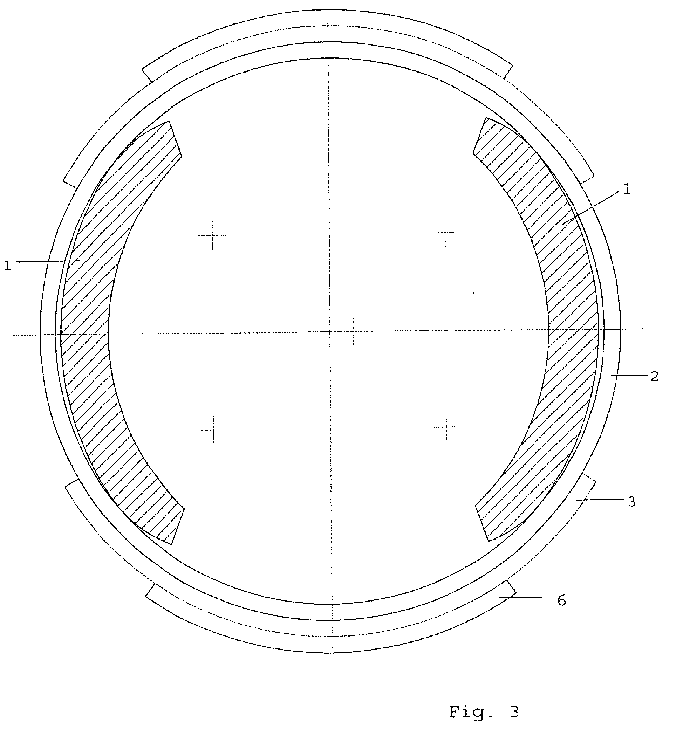

Fig. 3 stellt ein Gehäuse einer weiteren Ausführungsform der vorliegenden Erfindung dar, das auf der Ausführungsform aufbaut, die in Fig. 1 zu sehen ist. Aus diesem Grund sind die inneren beiden Gehäuselagen auch wiederum mit 2 und 3 bezeichnet. Das Gehäuse weist weiterhin eine dritte Gehäuselage 6 auf, die aus zwei konzentrischen Zylinderbögen 6 gebildet wird. Diese Zylinderbögen 6 sind über den Zylinderbögen 3 zentriert. Sie bieten eine weitere Verbesserung des magnetischen Rückflusses. Gleichzeitig ermöglichen sie je nach Motor eine weitere Reduktion der Gehäuselagendicken. Dies ermöglicht ein Biegen der Lagen mit kostengünstigeren Maschinen, da geringere Kräfte ausreichen. Ebenfalls ist durch die Verwendung von mehr als zwei Gehäuselagen eine bessere Optimierung in Hinblick auf den Materialverbrauch möglich.

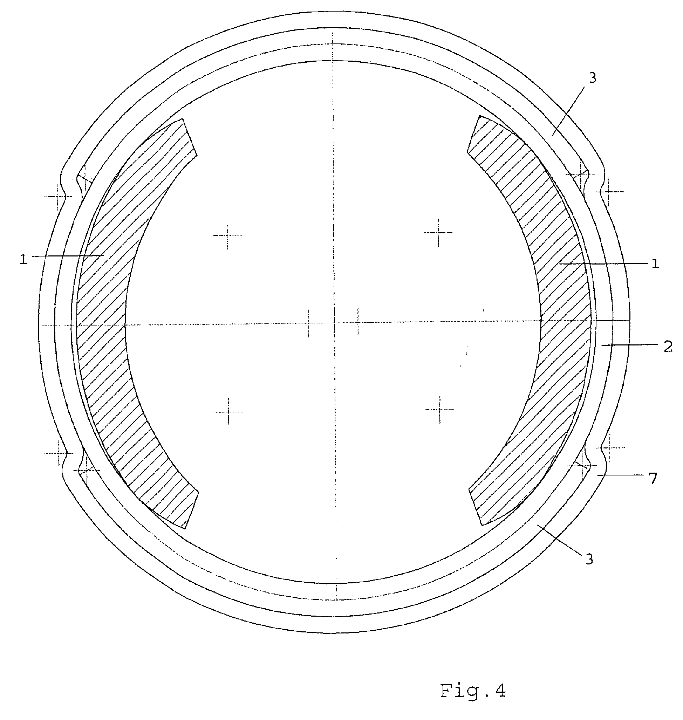

In Fig. 4 ist ein Gehäuse gemäß noch einer weiteren Ausführungsform der vorliegenden Erfindung dargestellt, die Zeichnung ist mit Fig. 1 vergleichbar. Eine dritte geschlossene Gehäuselage 7 umgibt die Gehäuselagen 2 und 3. Sie ist in den Bereichen in ihrem Radius verjüngt, in denen die Gehäuselage 3 Aussparungen aufweist. Ein solcher Aufbau gewährleistet, dass die nicht geschlossene Gehäuselage bei dauernder Schwingbelastung nicht verloren werden kann und dass sie gegen eindringende Feuchtigkeit geschützt wird.

Eine solche Gehäuselage 7 kann z.B. aus einem kunststoffartigen Material bestehen und der mechanischen Festigkeit des Gehäuses dienen. In einem solchen Fall kann z.B. die Gehäuselage 2 dünner gewählt werden.

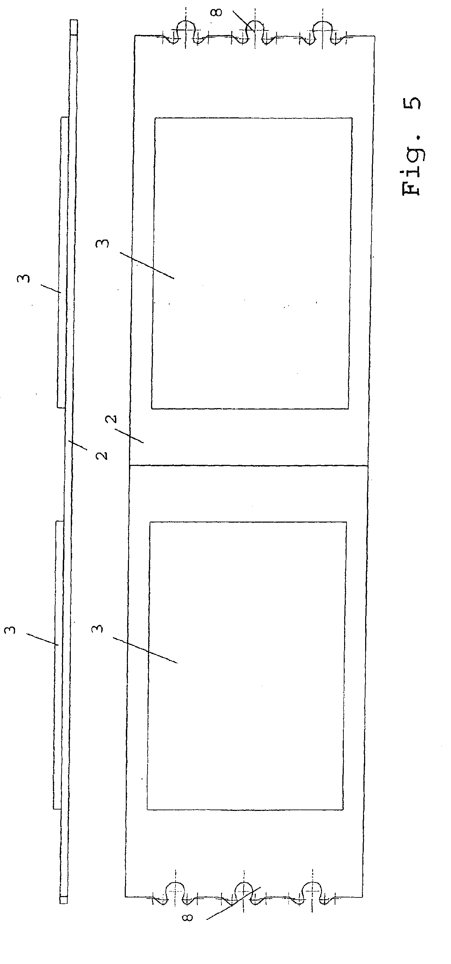

In Fig. 5 ist ein Seitenansicht und eine Draufsicht eines Gehäuses gemäß der Ausführungsform aus Fig. 1 der vorliegenden Erfindung vor dem Biegen zu sehen. Es wird die später geschlossene Gehäuselage 2 dargestellt. In der Draufsicht sind die Haltemittel 8 zu sehen. Diese Haltemittel 8 greifen im gebogenen Zustand ineinander und sorgen so für einen sicheren Schluss der geschlossenen Gehäuselage 2. Auf der Gehäuselage 2 ist die Gehäuselage 3 aufgebracht, die aus zwei Teilstücken besteht. In der Darstellung entspricht ihre Bereite nicht der Bereite der Gehäuselage 2, dies ist nicht zwingend. Bevorzug wird die Bereite der Gehäuselage 3 jedoch in Abstimmung mit den Permanentmagneten gewählt, so dass nur ein verstärkter Rückfluss im Bereich der Magneten vorgesehen wird. Dies ermöglicht die weitere Einsparung von Material. Ein weiterer Vorteil ist, dass die Verarbeitungspräzision für jede Gehäuselage nach Bedarf gewählt werden kann. So sind je nach Gehäuse z.B. die Anforderungen für die Gehäuselage 3 deutlich geringer, verglichen mit denen für die Gehäuselage 2. So ist eine optimierte bedarfgerechte Prozessführung möglich.

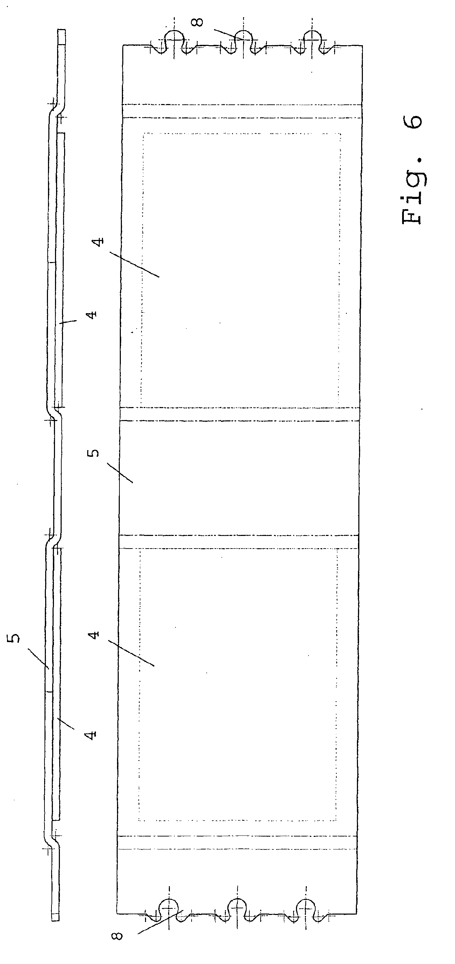

Die Darstellung in Fig. 6 ist vergleichbar zu der in Fig. 5, jedoch bezieht sich die Gehäusebildung auf ein Gehäuse gemäß der Ausführungsform aus Fig. 2. Die Biegungen in der Gehäuselage 5 sind deutlich erkennbar.

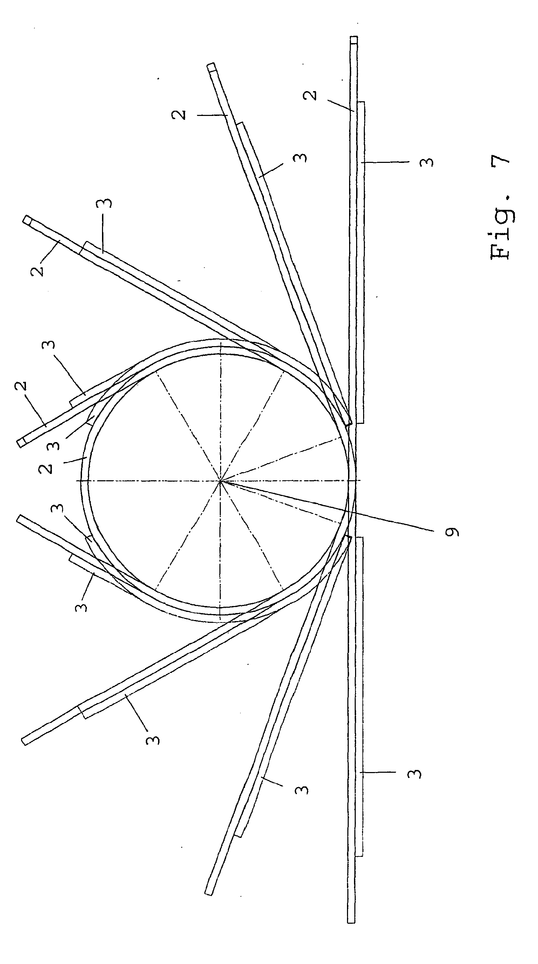

In Fig. 7 wir das Verfahren des gemeinsamen Biegens mehrerer Lagen veranschaulicht an hand der Gehäusebildung aus Fig. 1. Die Gehäuselagen werden um einen Dorn 9 gebogen. Die Gehäuselagen 2 und 3 werden gemeinsam kontinuierlich und unterbrechungsfrei um den Dorn 9 gebogen. Die äußeren Enden der Gehäuselagen 2 und 3 können vorgebogen werden, was hier nicht dargestellt ist. Ein Vorteil des Vorbiegens ist, dass beim Zusammenschieben der Enden keine Flitter entstehen und dass die Rundheit des Gehäuses im Verschlussbereich verbessert wird.

Beim gemeinsamen Biegen mehrerer dünner Schichen sind nicht so hohe Kräfte notwendig, wie beim Biegen einer Lage, die die gleiche Gesamtdicke aufweist, dies ermöglicht die Verwendung von kostengünstigeren Umformautomaten. Es können auch Lagen mit unterschiedlichen Festigkeiten gemeinsam gebogen werden.

## Patentansprüche

1. Gehäuse für eine elektrische Kleinmaschine, wie z.B. einen Generator oder einen Elektromagneten und insbesondere für einen permanentmagnetisch erregten Elektromotor,
**dadurch gekennzeichnet, dass**
das Gehäuse aus zumindest zwei Gehäuselagen (2, 3) gebildet ist, von denen zumindest eine Gehäuselage (3) in ihrem Umfang nicht geschlossen ist.

2. Gehäuse nach Anspruch 1, **dadurch gekennzeichnet, dass** eine Gehäuselage (3) an mindestens zwei Stellen unterbrochen ist.

3. Gehäuse nach einem der Ansprüche 1 oder 2, **dadurch gekennzeichnet, dass** mindestens eine der Gehäuselagen (2, 3) aus zwei konzentrischen Zylinderbögen (3) besteht.

4. Gehäuse nach Anspruch 3, **dadurch gekennzeichnet, dass** die Achse, die die Schwerpunkte der zwei konzentrischen Zylinderbögen (3) verbindet, ungefähr senkrecht zu einer Achse steht, die die Schwerpunkte der Permanentmagnete (1) verbindet, gesehen in einem Querschnitt senkrecht zur Gehäuselängsachse.

5. Gehäuse nach einem der Ansprüche 1 bis 3, **dadurch gekennzeichnet, dass** eine nicht geschlossene Gehäuselage (3) spiegelsymmetrisch ist zu der Achse, die die Schwerpunkte der beiden Permanentmagneten (1) verbindet, gesehen in einem Querschnitt senkrecht zur Gehäuselängsachse.

6. Gehäuse nach Anspruch 4 oder 5, **dadurch gekennzeichnet, dass** jede der zwei konzentrischen Zylinderbögen (3) eine Zylinderbogenlänge bezogen auf den Radius von 0.1*Pi bis 0.9*Pi aufweist.

7. Gehäuse nach einem der vorangehenden Ansprüche, **dadurch gekennzeichnet, dass** die nicht geschlossene Gehäuselage innerhalb der geschlossene Gehäuselage liegt.

8. Gehäuse nach einem der vorangehenden Ansprüche, **dadurch gekennzeichnet, dass** die geschlossene Gehäuselage (5) in den Bogenbereichen, in denen die nicht geschlossene Gehäuselage (4) Unterbrechungen aufweist, den gleichen Innenradius aufweist, wie die nicht geschlossene Gehäuselage (4).

9. Gehäuse nach Anspruch 7 oder 8, **dadurch gekennzeichnet, dass** die geschlossene Gehäuselage (5) in den Bogenbereichen, in denen die nicht geschlossene Gehäuselage (4) vorhanden ist, einen Innenradius aufweist, der um die Dicke der nicht geschlossenen Gehäuselage (4) vergrößert ist.

10. Gehäuse nach einem der vorangehenden Ansprüche, **dadurch gekennzeichnet, dass** drei Gehäuselagen (2, 3, 7) vorhanden sind.

11. Gehäuse nach Anspruch 10, **dadurch gekennzeichnet, dass** die dritte Gehäuselage (7) geschlossen ist.

12. Gehäuse nach Anspruch 11, **dadurch gekennzeichnet, dass** die dritte Gehäuselage (7) einen Außenradius aufweist, der dem Innenradius der nicht geschlossenen Gehäuselage (3) entspricht, so dass diese von zwei geschlossenen Gehäuselagen eingeschlossen ist.

13. Gehäuse nach Anspruch 10, **dadurch gekennzeichnet, dass** die beiden äußeren Gehäuselagen (3, 6) nicht geschlossen sind.

14. Gehäuse nach Anspruch 13, **dadurch gekennzeichnet, dass** die jeweiligen Zylinderbogenlängen der nicht geschlossenen Gehäuselagen (3,6) von Innen nach Außen abnehmen.

15. Gehäuse, insbesondere nach einem der vorangehenden Ansprüche, **dadurch gekennzeichnet, dass** mindestens eine Gehäuselage eine Dicke aufweist, die von der Dicke einer anderen Gehäuselage abweicht.

16. Gehäuse nach Anspruch 15, **dadurch gekennzeichnet, dass** die innerste Gehäuselage eine geringere Dicke aufweist als eine weiter außen liegende Gehäuselage.

17. Gehäuse nach Anspruch 15, **dadurch gekennzeichnet, dass** eine nicht geschlossene Gehäuselage dicker ist als eine geschlossene Gehäuselage.

18. Gehäuse nach Anspruch 15, **dadurch gekennzeichnet, dass** bei einem Gehäuse mit zwei nicht geschlossenen Gehäuselagen die äußere nicht geschlossene Gehäuselage, insbesondere mit einer kleineren Bogenlänge, dicker ist als die innere nicht geschlossene Gehäuselage.

19. Gehäuse nach Anspruch 15, **dadurch gekennzeichnet, dass** die innerste Gehäuselage eine größere Dicke aufweist als eine weiter außen liegende Gehäuselage.

20. Gehäuse, insbesondere nach einem der vorangehenden Ansprüche, **dadurch gekennzeichnet, dass** zumindest eine der Gehäuselagen aus einem kunststoffartigen Material besteht.

21. Gehäuse nach Anspruch 20, **dadurch gekennzeichnet, dass** mindestens eine geschlossene Gehäuselage aus einem kunststoffartigen Material besteht.

22. Gehäuse nach Anspruch 20 oder 21, **dadurch gekennzeichnet, dass** das Gehäuse aus zwei Gehäuselagen bestehet, wobei die innere, geschlossene Gehäuselage aus einem kunststoffartigen Material besteht und die äußere nicht geschlossene Gehäuselage aus einem magnetisch leitfähigen Material besteht.

23. Gehäuse nach Anspruch 20, **dadurch gekennzeichnet, dass** das Gehäuse aus zwei Gehäuselagen bestehet, wobei die innere, nicht geschlossene Gehäuselage aus einem magnetisch leitfähigen Material besteht und die äußere geschlossene Gehäuselage aus einem kunststoffartigen Material besteht.

24. Gehäuse nach einem der vorangehenden Ansprüche, **dadurch gekennzeichnet, dass** zumindest eine geschlossene Gehäuselage (2) eine Wandstärke von weniger als 2mm aufweist.

25. Gehäuse nach einem der vorangehenden Ansprüche, **dadurch gekennzeichnet, dass** die Gehäuselagen (2, 3) gefügt sind durch Form-, Kraft- oder Stoffschluss, insbesondere durch Durchsetzfügen oder Schweißen.

26. Gehäuse nach einem der vorangehenden Ansprüche, **dadurch gekennzeichnet, dass** zumindest eine geschlossene Gehäuselage (2) mit Haltemitteln (8) an ihren Endkanten versehen ist, wobei das Zusammenhalten der Endkanten den Schluss der Gehäuselage bildet.

27. Gehäuse nach einem der vorangehenden Ansprüche, **dadurch gekennzeichnet, dass** die Gehäuselagen (2, 3) ohne wesentliche Zwischenräume in radialer Richtung übereinander liegen.

28. Gehäuse nach einem der vorangehenden Ansprüche, **dadurch gekennzeichnet, dass** die Gehäuselagen (2, 3) aus magnetisch leitfähigem Material bestehen, insbesondere verzinktem Stahlblech.

29. Gehäuse nach einem der vorangehenden Ansprüche, **dadurch gekennzeichnet, dass** unterschiedliche Gehäuselagen (2, 3) aus Materialien mit unterschiedlichen Eigenschaften, insbesondere bezüglich ihrer magnetischen Leitfähigkeit oder ihrer mechanischen Festigkeit, bestehen.

30. Elektrische Kleinmaschine, die permanentmagnetisch erregt wird, insbesondere ein Elektromotor, **dadurch gekennzeichnet, dass** das Gehäuse nach einem der vorhergehenden Ansprüche gebildet ist.

31. Verfahren zur Herstellung eines Gehäuses für eine elektrische Kleinmaschine, insbesondere einen permanentmagnetisch erregten Elektromotor, **dadurch gekennzeichnet, dass** eine Mehrzahl von Gehäuselagen (2, 3) gemeinsam gebogen werden.

32. Verfahren nach Anspruch 31, **dadurch gekennzeichnet, dass** ein Gehäuse gemäß einem der Ansprüche 1 bis 29 hergestellt wird.

33. Verfahren nach Anspruch 31 oder 32, **dadurch gekennzeichnet, dass** die Gehäuselagen um einen Dorn (9) gebogen werden.

34. Verfahren nach Anspruch 31, **dadurch gekennzeichnet, dass** die äußeren Enden der Gehäuselagen (2, 3) in einem ersten Schritt vorgebogen werden.
